# EUROPEAN PATENT SPECIFICATION

(11) **EP 4 421 481 B1**
(45) Date of publication and mention of the grant of the patent: **14.01.2026**
(21) Application number: 22882296.1
(22) Date of filing: 27.05.2022
(51) Int. Cl.: G01N 23/04, G01N 23/10, G01V 5/22

(54) **FULL-AUTOMATIC DETECTION SYSTEM AND METHOD**
VOLLAUTOMATISCHES DETEKTIONSSYSTEM UND -VERFAHREN
SYSTÈME ET PROCÉDÉ DE DÉTECTION ENTIÈREMENT AUTOMATIQUE

(30) Priority: 18.10.2021 CN 202111207668
(43) Date of publication of application: 28.08.2024
(73) Proprietor: Nuctech Company Limited, TongFang Building Shuangqinglu Haidian District Beijing 100084 (CN); Suzhou Weimu Intelligent System Co., Ltd., Suzhou, Jiangsu 215163 (CN)
(72) Inventor: CHEN, Changzhuo, Beijing 100084 (CN); BAO, Yuntai, Beijing 100084 (CN); LI, Yuanjing, Beijing 100084 (CN); XIAO, Yi, Beijing 100084 (CN); ZHANG, Shunsheng, Beijing 100084 (CN); WANG, Di, Beijing 100084 (CN); JIANG, Tao, Beijing 100084 (CN); XU, Dingdian, Beijing 100084 (CN); LI, Lulu, Beijing 100084 (CN); ZHANG, Linlin, Beijing 100084 (CN); QIU, Minghua, Beijing 100084 (CN); HUANG, Yicheng, Beijing 100084 (CN); XU, Renran, Beijing 100084 (CN)
(74) Representative: Zimmermann, Tankred Klaus
(86) International application number: PCT/CN2022/095562
(87) International publication number: WO 2023/065671

(56) References cited:
- WO-A1-96/13839
- WO-A2-2009/023314
- CN-A- 101 231 254
- CN-A- 101 900 695
- CN-A- 102 519 989
- CN-A- 104 865 279
- CN-A- 105 486 743
- CN-U- 205 263 028
- GB-A- 2 519 692
- GB-A- 2 544 612
- KR-A- 20180 009 904

## Description

### TECHNICAL FIELD

The present disclosure relates to the field of detection, and more specifically, to a fully automatic detection system and a fully automatic detection method.

### BACKGROUND

The X-ray computed tomography (CT) device based on the dual energy material discrimination technology has detection capacity limitations. Although CT systems may achieve automatic identification and alarm of various contrabands such as solid explosives, liquid explosives, and drugs, there are limitations in technical principles. Firstly, the CT systems may only detect contraband with a certain quality or above, having a certain Limit of Detection (LOD), which is usually in the hundreds of grams level. Contraband below such detection limit is difficult to be detected. If CT security machines fail to detect the contraband below such detection limit, the threats may be released, leading to considerable security risks. Secondly, there are daily interference substances, whose density (ρ) and effective atom number (Z_{eff}) are similar to the contrabands. Under the premise of ensuring the probability of detection (POD), it is difficult to further accurately identify, leading to false alarms. At present, the false alarm rate of contrabands in CT technology is approximately in a range of 10% to 30%, which increases the pressure for security staff to re-check the suspicious target.

The process of using the related trace detection device is to extract detection samples by manual operation, which is time-consuming and labor-intensive. Generally, a sampling swab either held by hand (wearing gloves) or a sampling wand is used to directly wipe the passenger or the surface of baggage to acquire samples. Then, the sampling swab with the collected sample is inserted into the sample inlet, waiting for the detection results. The entire process requires manual operation, which not only costs manpower, but also requires additional training for operators on how to operate the sampling swab. Moreover, explosive detection is based on the sampling swab, which belongs to consumables. As passenger traffic increases, the amount of consumables used increases accordingly. The time of the entire process, from manual sampling, sample introduction, analysis and waiting for the next detection, is at least more than 1 minute. Passengers wait for a long time for security inspection, which is not conducive to normal on-site traffic, resulting in a low pass rate.

GB2544612A discloses a darkroom type security inspection apparatus, including: a housing constituting a closed darkroom, and assemblies in the housing. The assemblies include: a sampling unit for collecting a sample from an object to be inspected, e.g. via an applied tornado flow; a conveyor; an assembly for concentrating the sample via desorption; an ion mobility spectrometer; and an X-ray unit to detect the object position so that the object can be conveyed to an expected position in the sampling unit. The teaching of GB2544612A is targeted to luggage inspection in e.g. airport customs where baggage is inspected without destroying or unpacking it. A seal may be formed between the belt and a brace. A semi-permeable membrane may be used to filter the sample. The processing assembly may include sieve drum and thermal desorption chamber.

KR20180009904A discloses a security system, which is connected to each of an image acquisition tunnel portion and an explosive detection tunnel portion so as to form one tunnel, and allows one conveyor to pass through the image acquisition tunnel portion and the explosive detection tunnel portion so as to enable a passengers objects to flow, where (a) the image acquisition tunnel portion includes a passenger object detection sensor, an optical camera, and an x-ray projection image acquisition device, where (b) the explosive detection tunnel portion is provided with an ion suctioning-type or an electromagnetic spectrum analysis-type explosion detection device.

WO2009023314A2 discloses a system including a radiation detection component, a toxic chemical detection component, a toxic chemical agent sampling component, a bio-threat detection component, a puffer-based bio-threat sampling component, an explosive detection component, and an X-ray based imager, such that it automatically screens mail for the presence of multiple threat agents, such as chemical, biological, radiological, nuclear and explosive threats. An automated sample arm collects a sample when a sampling substrate contacts a portion of the item of mail while there is relative motion between the automated sample arm and the item of mail. The sample is conveyed to a detector and the sampling substrate is regenerated by heating it.

### SUMMARY

In view of this, the embodiments of the present disclosure provide a fully automatic detection system according to claim 1, and a fully automatic detection method according to claim 7. The invention is defined by the appended claims.

According to the present invention, a fully automatic detection system is provided, including: a first detection device configured to perform a physical scanning on an object to be inspected; a second detection device provided on an upstream or a downstream of the first detection device, and configured to perform a chemical detection on the object to be inspected; and a conveying device configured to convey the object to be inspected to the first detection device and the second detection device.

In some embodiments, the first detection device includes: a radiation source configured to emit a ray to scan the object; and a detector provided on a downstream of the radiation source, and configured to receive the ray to form a scanning image of the object to be inspected.

In some embodiments, the first detection device includes a CT system.

In the invention according to the wording of the claims, the second detection device includes a flexible sampling mechanism, and the flexible sampling mechanism includes: a first flexible sampling mechanism configured to collect a particle sample on the object to be inspected; and a second flexible sampling mechanism configured to collect gas sample on the object to be inspected.

In the invention according to the wording of the claims, the first flexible sampling mechanism includes sampling curtain, the sampling curtain comes into contact and friction of the object to be inspected, and the sampling curtain is configured to collect the particle sample on the object to be inspected.

In the invention according to the wording of the claims, the second flexible sampling mechanism includes a sampling tube, and the sampling tube is configured to suction the gas sample on the object to be inspected.

In the invention according to the wording of the claims, the second detection device includes a plurality of sets of flexible sampling mechanisms.

In the invention according to the wording of the claims, the second detection device further includes a control device, the control device is electrically connected to the plurality of sets of flexible sampling mechanisms, and the control device is configured to control the plurality of sets of flexible sampling mechanisms to operate sequentially in a time-sharing manner.

In some embodiments, the detection system further includes an induction device and a processing device. The induction device and the processing device are electrically connected to the first detection device and the second detection device. The processing device is configured to control the first detection device and the second detection device to be turned on, when the induction device induces that the object to be inspected enters the inspection region.

In some embodiments, the induction device includes a position sensor configured to induce a position of the object to be inspected.

In some embodiments, the detection system further includes a display device. The display device is electrically connected to the first detection device and the second detection device. The display device is configured to display a detection result of the first detection device and a detection result of the second detection device.

Another aspect of the present invention according to the wording of the claims, provides a fully automatic detection method applied to the detection system as described above, including: conveying an object to be inspected to an inspection region using the conveying device; performing a physical scanning on the object to be inspected using the first detection device; performing a chemical detection on the object to be inspected using the second detection device; and simultaneously obtaining a physical scanning result and a chemical detection result of the object to be inspected, wherein the second detection device is provided on an upstream or a downstream of the first detection device.

In some embodiments, the physical scanning includes performing a scanning and imaging on the object using a radiation source and a detector.

In some embodiments, the chemical detection includes performing a trace detection of particles and gases on the object to be inspected using a flexible sampling mechanism.

In some embodiments, the chemical detection includes detecting sequentially in a time-sharing manner using a plurality of sets of flexible sampling mechanisms.

In some embodiments, the detection method further includes: detecting an item using the detection system, so as to obtain a historical physical scanning result and a historical chemical detection result of the item; training the historical physical scanning result and the historical chemical detection result to obtain a predictive model; and obtaining the physical scanning result and the chemical detection result of the object to be inspected based on the predictive model.

In some embodiments, the detection method further includes: the predictive model updates itself based on a result of each of the detecting.

### BRIEF DESCRIPTION OF THE DRAWINGS

Through the following description of the embodiments of the present disclosure with reference to the accompanying drawings, the above and other purposes, features, and advantages of the present disclosure will be clearer, in which:
FIG. 1 schematically shows a block diagram of a fully automatic detection system according to an embodiment of the present disclosure;
FIG. 2 schematically shows a working principle of a fully automatic detection system according to an embodiment of the present disclosure; and
FIG. 3 schematically shows a structure of a fully automatic detection system according to an embodiment of the present disclosure.

### DETAILED DESCRIPTION OF EMBODIMENTS

Although embodiments of the present disclosure have been shown and described, it may be understood by those skilled in the art that changes may be made to these embodiments without departing from the principles of the present disclosure. The scope of the present invention is limited by the accompanying claims.

Hereinafter, the embodiments of the present disclosure will be described with reference to the accompanying drawings. However, it should be understood that these descriptions are only illustrative and not intended to limit the scope of the present disclosure. In the following detailed description, for ease of explanation, many specific details are elaborated to provide a comprehensive understanding of the embodiments of the present disclosure. However, it is obvious that one or more embodiments may also be implemented without these specific details. In addition, in the following explanation, descriptions of well-known structures and techniques have been omitted to avoid unnecessary confusion with the concepts of the present disclosure.

The terms used here are only intended to describe specific embodiments and are not intended to limit the present disclosure. The terms "include", "comprise", etc. used here indicate the existence of the features, steps, operations, and/or components, but do not exclude the existence or addition of one or more other features, steps, operations, or components.

In the case of using expressions such as "at least one of A, B, or C", it should generally be explained according to the meaning that those skilled in the art usually understand (for example, "a system with at least one of A, B, or C" should include but not be limited to systems with A only, B only, C only, A and B, A and C, B and C, and/or A, B and C, etc.). The terms "first" and "second" are only used to describe and may not be understood as indicating or implying relative importance or implying the quantity of technical features indicated. Therefore, the features limited to "first" and "second" may explicitly or implicitly include one or more of the features.

According to the basic concept of the present disclosure, a high-speed online fully automatic trace detection system is provided, that is, a fully automatic detection system and a fully automatic detection method are provided.

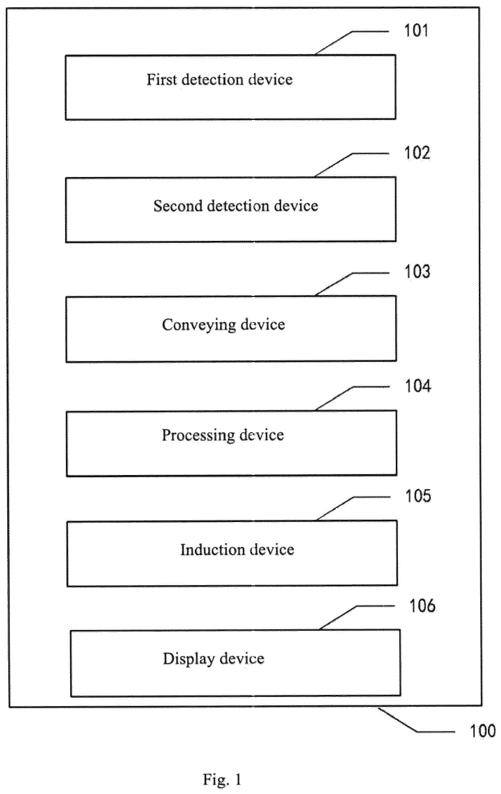

FIG. 1 schematically shows a block diagram of a fully automatic detection system according to an embodiment of the present disclosure.

As shown in FIG. 1, the embodiment of the present disclosure provides a fully automatic detection system 100, including: a first detection device 101 used to perform a physical scanning on an object to be inspected; a second detection device 102 provided on an upstream or a downstream of the first detection device 101, and used to perform a chemical detection on the object to be inspected; and a conveying device 103 used to convey the object to be inspected to the first detection device 101 and the second detection device 102. For example, the physical scanning may be X-ray scanning, CT scanning, or any combination thereof. Any technology that may be used for performing a physical scanning on objects is acceptable, and the present disclosure is not limited to this. In addition, the chemical detection is mainly trace detection, and the commonly used technique is ion mobility spectrometry (IMS).

The ion mobility spectrometry (IMS), as a trace detection technology for rapid detection of explosives, drugs, industrial toxic gases, and chemical warfare agents, has been widely used in security inspection fields such as airports, customs, subways, and government agencies. The ion mobility detector using IMS technology mainly includes three components: a drift tube for ion analysis, a sample inlet (or analyzer) for vaporizing samples, and a sampling swab (or gas collection device) for collecting/acquiring trace samples. For the IMS detectors used for explosive/drug detection, due to the extremely low saturation vapor pressure (ppb to ppt level) or non-volatility of the sample to be detected, the staff usually uses the sampling swab to collect trace samples remaining on the surface of the item. Generally, a handheld sampling swab (wearing gloves) is swiped directly on the surface of the item; or the sampling swab is fixed on the sampling wand, and the sample is collected by the handheld sampling wand. Then the sampling swab with the collected sample is inserted into the sample inlet for detection, waiting for the detection result.

It should be noted that the second detection device 102 may be provided on an upstream or downstream of the first detection device 101. The detection of the first detection device 101 and the detection of the second detection device 102 are independent from each other, which will not affect each other. Therefore, the positions of the first detection device 101 and the second detection device 102 may be adjusted according to the actual situation. For example, the second detection device of the fully automatic trace detection system may be provided on an automatic tray retrieval system, which is located at an entrance or exit of the CT system.

In the embodiment of the present disclosure, the first detection device includes: a radiation source used to emit a ray to scan the object to be inspected; and a detector provided on a downstream of the radiation source, and used to receive the ray to form a scanning image of the object to be detected. The radiation source may emit X-rays.

In the embodiment of the present disclosure, the first detection device includes a CT system.

In the invention according to the wording of the claims, the second detection device includes a flexible sampling mechanism. The flexible sampling mechanism includes: a first flexible sampling mechanism used to collect a particle sample on the object to be inspected; and a second flexible sampling mechanism used to collect a gas sample on the object to be inspected. In the invention according to the wording of the claims, the sampling mechanism is both a sampling curtain and a sampling tube. Since the sampling mechanism is soft, during sampling, it may be quickly approached and adapt to the shape and posture of the object to be inspected in the movement. At the same time, the sampling mechanism may not damage the surface of the object to be inspected, and may better fit with the surface shape of the object to be inspected, so as to improve the sample quality acquired after sampling.

It should be noted that in actual detection, there may be particles attached to the surface of the object to be inspected that need to be detected, such as particles of prohibited chemical substances. It is also possible that although there are no particles on the surface, there is a situation where the vapour of prohibited chemical substances is emitted from the inside of the object to be inspected. Therefore, it is required that the sampling mechanism is able to sampling both particles and vapour to improve the detection efficiency and minimize the probability of missed detections. For the two sample forms of particles and vapour, a sampling curtain is used to collect a particle sample on the object to be inspected, and a sampling tube is used to collect a gas sample on the object to be inspected. In addition, the sampling curtain may be provided with a sampling medium material and a suction channel to extract prohibited chemical substances' both particles and vapour on the surface and nearby of the object to be inspected through contact wiping and suction sampling. The trace detector corresponding to the flexible sampling mechanism is used to detect the collected particle sample and gas sample, so as to obtain the detection results.

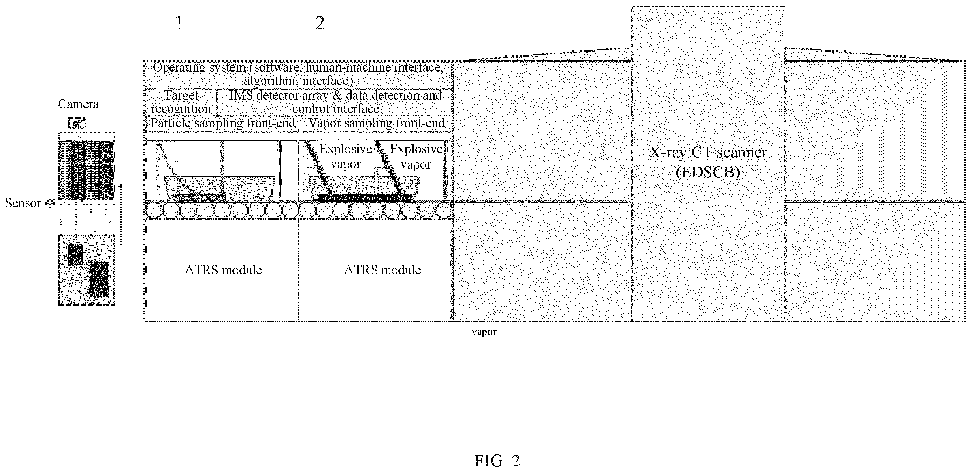

FIG. 2 schematically shows a working principle of a fully automatic detection system according to an embodiment of the present disclosure.

As shown in FIG. 2, in the invention according to the wording of the claims, the first flexible sampling mechanism includes a sampling curtain 1. The sampling curtain 1 comes into contact and friction of the object to be inspected and is used to collect the particle sample on the object to be inspected.

As shown in FIG. 2, in the invention according to the wording of the claims, the second flexible sampling mechanism includes a sampling tube 2. The sampling tube 2 is used to suction the gas sample on the object to be inspected. It should be noted that, the sampling tube 2 may be also used to collect the particle sample at the same time, which may be adjusted according to the actual situation.

In the invention according to the wording of the claims, the second detection device includes a plurality of sets of flexible sampling mechanisms. It should be noted that each set of flexible sampling mechanism may be provided with a corresponding set of trace detectors to detect the sampling results. It is also possible to uniformly allocate all trace detectors and transmitted the samples to the currently available trace detectors for detection. According to the actual situation, several sets of flexible sampling mechanisms may share a set of trace detectors to mixed detect the sampling results, which further improves the detection efficiency. The number of flexible sampling mechanisms and the corresponding trace detectors may be adjusted according to the actual situation.

In the invention according to the wording of the claims, the second detection device further includes a control device. The control device is electrically connected to the plurality of sets of flexible sampling mechanisms. The control device controls the plurality of sets of flexible sampling mechanisms to operate sequentially in a time-sharing manner. For example, the control device may include a motor, that is, each set of flexible sampling mechanisms is controlled by a corresponding motor to start or stop sampling.

In actual use, in order to improve the detection efficiency, it may be required to detect a plurality of items simultaneously. When the plurality of items are simultaneously transmitted to the second detection device, it is required to regulate the plurality of sets of flexible sampling mechanisms through the control device. For example, an image sensor and a position sensor may be used to recognize the shape and position of an item, and then a flexible sampling mechanism at a corresponding position may be called for sampling according to the shape of the item. In addition, after the flexible sampling mechanism sends the samples to the trace detector for detection, the trace detector may detect the sampling samples and output detection results. Afterwards, the trace detector may undergo offline cleaning to restore performance. The trace detector is not available during the offline cleaning. Therefore, through the regulation by the control device, the flexible sampling mechanism and the trace detector may be reasonably allocated to ensure that at least one set of flexible sampling mechanisms may sample and detect each item to be inspected, so as to meet the requirements of high-speed, real-time and continuous inspection of the plurality of items.

As shown in FIG. 1, in the embodiment of the present disclosure, the detection system further includes an induction device 105 and a processing device 104. The induction device 105 and the processing device 104 are electrically connected to the first detection device 101 and the second detection device 102. The processing device 104 is used to control the first detection device 101 and the second detection device 102 to be turned on, when the induction device 105 induces that the object to be inspected enters an inspection region. In this way, the detection system may be in a standby state when not in use, so as to reduce energy consumption.

In the embodiment of the present disclosure, the induction device 105 includes a position sensor used to induce a position of the object to be inspected. For example, the position sensor may determine the position of an object and perceive the presence of detectable baggage within a set distance, through a motion camera or a radar. When the object is detected entering the inspection region, the sampling mechanism and detector unit at a corresponding position may be automatically turned on.

As shown in FIG. 1, in the embodiment of the present disclosure, the detection system further includes a display device 106. The display device 106 is electrically connected to the first detection device 101 and the second detection device 102, and is used to display a detection result of the first detection device 101 and a detection result of the second detection device 102. If the material information and the ion mobility spectra are detected, they will be directly transmitted to the X-ray CT device through the communication interface and displayed on the display screen, so that the security staff may synchronously know the detection information of the trace detection system when reviewing the scanning images of baggage or items.

The detection system provided in the embodiment of the present disclosure may provide detection results in both chemical and physical perspectives simultaneously, so that the system or user may make a final conclusion at once according to the comprehensive detection results presented on the same screen in multiple dimensions of chemistry and physics, thereby improving the detection accuracy and the detection speed, while the operation is simple and may be completed automatically.

The chemical information and physical radiation imaging information provided by the detection system of the embodiment of the present disclosure may iterate the algorithm based on the accumulated standardized data through methods such as deep learning and artificial intelligence, thereby further improving the probability of detection, reducing the false alarm rate, and improving the accuracy of the conclusions drawn by the system. In addition, the detection system may support remote centralized image processing (CIP), further improving the detection efficiency and reducing the requirements for on-site operators. The artificial intelligence may adaptively adjust the weight of the detection results of the trace detection system in the final conclusion.

The detection object of the detection system in the embodiment of the present disclosure may be extended. The fully automatic trace detection system may not only detect explosives, but also detect prohibited substances such as drugs, toxic and harmful gases, explosive precursors, and precursor chemicals by expanding the feature database, continuously enhancing the detection capability of the system.

The detection system of the embodiment of the present disclosure follows an Open Architecture, which may further integrate trace detectors based on technical principles such as mass spectrometry, field asymmetric ion mobility spectrometry (FAIMS), electrochemical sensor arrays, photoacoustic spectroscopy (PA), QCL infrared spectrum systems, fluorescence quenching detectors, quartz crystal microbalance (QCM), etc., to achieve rapid detection of trace chemical substances.

The detection system of the embodiment of the present disclosure may be used for high-speed real-time online baggage and item scanning in fields such as airports, customs, logistics, etc., especially for passenger cabin baggage screening and hold baggage screening in civil airports, in corporation with related smart security lanes. In addition, the detection system of the embodiment of the present disclosure may also operate independently on an automatic conveyor and achieve high-speed real-time online detection of trace chemical substances of concern in industrial applications such as food, chemical, pharmaceutical, biological, semiconductor, and machinery equipment manufacturing.

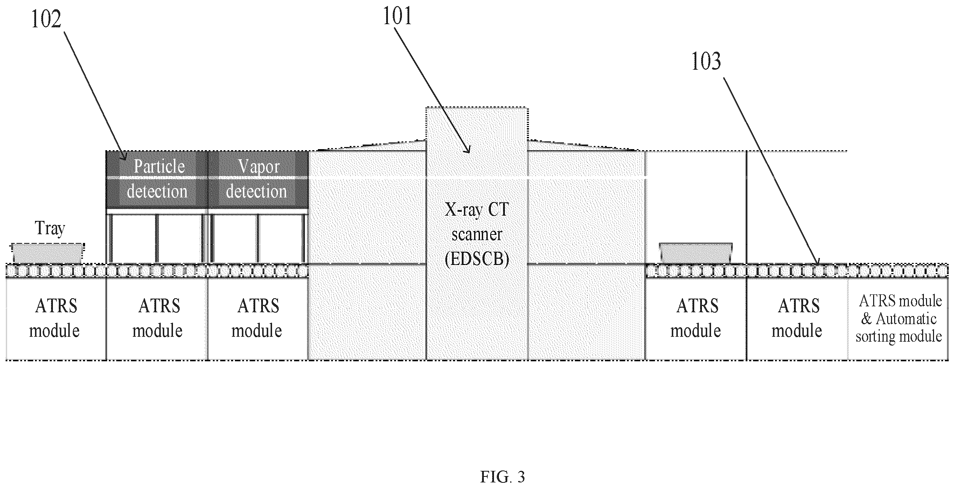

FIG. 3 schematically shows a structure of a fully automatic detection system according to an embodiment of the present disclosure.

As shown in FIG. 3, when the conveying device 103 automatically conveys the object to be inspected to the second detection device 102, the detection result in the chemical perspective is acquired through the trace detection system. Then, the conveying device 103 continues to convey the object to be inspected to the first detection device 101, and detection result in the physical perspective is obtained using the X-ray CT device. Next, the two detection results are displayed simultaneously on the display screen for reference by the security inspectors. At the same time, the system may also provide the conclusion according to the detection results. In this way, more accurate detection results, for trace substances that are difficult to be detected by X-ray CT device or chemical vapours that are difficult to be accurately identified, may be provided by using the trace detection system, so that the security staff may make decisions on whether to perform further inspections according to detection results from both physical and chemical perspectives.

The embodiment of the present disclosure provides a fully automatic detection method applied to the above-mentioned detection system, including: conveying an object to be inspected to an inspection region using the conveying device; performing a physical scanning on the object to be inspected using the first detection device; performing a chemical detection on the object to be inspected using the second detection device; and simultaneously obtaining a physical scanning result and a chemical detection result of the object to be inspected, wherein the second detection device is provided on an upstream or a downstream of the first detection device.

It should be noted that the physical scanning may be X-ray scanning, CT scanning, or any combination thereof. Any technology that may be used for performing a physical scanning on objects is acceptable, and the present disclosure is not limited to this. In addition, the chemical detection is mainly trace detection, and the commonly used technique is ion mobility spectrometry (IMS).

In the embodiment of the present disclosure, the physical scanning includes performing a scanning and imaging on the object to be inspected using a radiation source and a detector.

In the embodiment of the present disclosure, the chemical detection includes performing a trace detection of a particle and a gas on the object to be inspected using a flexible sampling mechanism.

In the embodiment of the present disclosure, the chemical detection includes detecting sequentially in a time-sharing manner using a plurality of sets of flexible sampling mechanisms.

In the embodiment of the present disclosure, the detection method further includes: detecting an item using the detection system, so as to obtain a historical physical scanning result and a historical chemical detection result of the item; training the historical physical scanning result and the historical chemical detection result to obtain a prediction model; and obtaining the physical scanning result and the chemical detection result of the object to be inspected based on the predictive model.

In the embodiment of the present disclosure, the detection method further includes: the predictive model updates itself based on a result of each of the detecting. The prediction model is continuously modified according to the detection results obtained from each detection, so that the physical scanning result and the chemical detection result are more accurate. At the same time, it may also improve the accuracy of the judgment conclusions determined by the system according to the physical scanning result and the chemical detection result, so that the detection process is more intelligent, convenient and faster.

Through the embodiments of the present disclosure, the problems of low detection accuracy, complex operation, high manual requirements, and long-time consumption in the related applications may be at least partially solved. The fully automatic detection system and the fully automatic detection method of the embodiments of the present disclosure may automatically detect trace prohibited items or threats such as solid explosives and liquid explosives in a real-time, high-speed, and online manner. The scanning features of the baggage to be inspected are presented from different perspectives of chemical detection and physical imaging, improving the detection accuracy and the detection speed, while the operation is simple and may be completed automatically.

Those skilled in the art may understand that the features recorded in the various embodiments and/or claims of the present disclosure may be associated and/or combined in various ways, even if such associations or combinations are not explicitly recorded in the present disclosure. Specifically, without departing from the teachings of the present disclosure, the features recorded in the various embodiments and/or claims of the present disclosure may be associated and/or combined in various ways. All these associations and/or combinations fall within the scope of the present disclosure.

The embodiments of the present disclosure are described above. However, these embodiments are for illustrative purposes only and are not intended to limit the scope of the present disclosure. Although various embodiments have been described separately above, this does not mean that the measures in the various embodiments may not be advantageously combined. The scope of the present invention **is** limited by the attached claims. Without departing from the scope of the present disclosure, those skilled in the art may make various substitutions and modifications, all of which should fall within the scope of the present disclosure.

## Claims

1. A fully automatic detection system (100), comprising:
a first detection device (101) configured to perform a physical scanning on an object to be inspected;
a second detection device (102) provided on an upstream or a downstream of the first detection device (101), and configured to perform a chemical detection on the object to be inspected; and
a conveying device (103) configured to convey the object to be inspected to the first detection device (101) and the second detection device (102),
wherein the second detection device (102) comprises a flexible sampling mechanism, and the flexible sampling mechanism comprises: a first flexible sampling mechanism configured to collect a particle sample on the object to be inspected; and a second flexible sampling mechanism configured to collect a gas sample on the object to be inspected,
wherein the first flexible sampling mechanism comprises a sampling curtain (1), the sampling curtain (1) comes into contact and friction of the object to be inspected, and the sampling curtain (1) is configured to collect the particle sample on the object to be inspected,
wherein the second flexible sampling mechanism comprises a sampling tube (2), and the sampling tube (2) is configured to suction the gas sample on the object to be inspected,
wherein the fully automatic detection system further comprises a trace detector, the flexible sampling mechanism is configured to send the particle sample and the gas sample to the trace detector for detection, and the trace detector is configured to detect the particle sample and the gas sample and output a detection result; and
wherein the second detection device (102) comprises a plurality of sets of flexible sampling mechanisms and a control device, the control device is electrically connected to the plurality of sets of flexible sampling mechanisms, and the control device is configured to control the plurality of sets of flexible sampling mechanisms to operate sequentially in a time-sharing manner, so as to reasonably allocate the plurality of sets of flexible sampling mechanisms and the trace detector to ensure that at least one set of flexible sampling mechanisms samples and detects each object to be inspected.

2. The detection system (100) of claim 1, wherein the first detection device (101) comprises:
a radiation source configured to emit a ray to scan the object to be inspected; and
a detector provided on a downstream of the radiation source, and configured to receive the ray to form a scanning image of the object to be inspected.

3. The detection system (100) of claim 2, wherein the first detection device (101) comprises a CT system.

4. The detection system (100) of claim 1, further comprising an induction device (105) and a processing device (104), wherein the induction device (105) and the processing device (104) are electrically connected to the first detection device (101) and the second detection device (102), and the processing device (104) is configured to:
control the first detection device (101) and the second detection device (102) to be turned on, when the induction device (105) induces that the object to be inspected enters an inspection region.

5. The detection system (100) of claim 4, wherein the induction device (105) comprises a position sensor configured to induce a position of the object to be inspected.

6. The detection system (100) of claim 1, further comprising a display device (106), wherein the display device (106) is electrically connected to the first detection device (101) and the second detection device (102), and the display device (106) is configured to display a detection result of the first detection device (101) and a detection result of the second detection device (102).

7. A fully automatic detection method applied to the detection system (100) of any one of claims 1 to 6, comprising:
conveying the object to be inspected to an inspection region using the conveying device (103);
performing the physical scanning on the object to be inspected using the first detection device (101);
performing the chemical detection on the object to be inspected using the second detection device (102); and
simultaneously obtaining a physical scanning result and a chemical detection result of the object to be inspected,
wherein the second detection device (102) is provided on the upstream or the downstream of the first detection device (101).

8. The detection method of claim 7, wherein the physical scanning comprises performing a scanning and imaging on the object to be inspected using a radiation source and a detector.

9. The detection method of claim 7, wherein the chemical detection comprises performing a trace detection of particles and gases on the object to be inspected using a flexible sampling mechanism.

10. The detection method of claim 7, further comprising:
detecting an item using the detection system (100), so as to obtain a historical physical scanning result and a historical chemical detection result of the item;
training the historical physical scanning result and the historical chemical detection result to obtain a predictive model; and
obtaining the physical scanning result and the chemical detection result of the object to be inspected based on the predictive model,
wherein the method further comprises:
the predictive model updates itself based on a result of each of the detecting.

## Patentansprüche

1. Vollautomatisches Detektionssystem (100), das folgende Merkmale aufweist:
eine erste Detektionsvorrichtung (101), die dazu konfiguriert ist, eine physikalische Abtastung an einem zu untersuchenden Objekt durchzuführen;
eine zweite Detektionsvorrichtung (102), die in Verarbeitungsrichtung vor oder nach der ersten Detektionsvorrichtung (101) vorgesehen ist und dazu konfiguriert ist, eine chemische Detektion an dem zu untersuchenden Objekt durchzuführen; und
eine Beförderungsvorrichtung (103), die dazu konfiguriert ist, das zu untersuchende Objekt zu der ersten Detektionsvorrichtung (101) und der zweiten Detektionsvorrichtung (102) zu befördern,
wobei die zweite Detektionsvorrichtung (102) einen flexiblen Probenahmemechanismus aufweist und der flexible Probenahmemechanismus Folgendes aufweist: einen ersten flexiblen Probenahmemechanismus, der dazu konfiguriert ist, eine Teilchenprobe an dem zu untersuchenden Objekt zu sammeln; und einen zweiten flexiblen Probenahmemechanismus, der dazu konfiguriert ist, eine Gasprobe an dem zu untersuchenden Objekt zu sammeln,
wobei der erste flexible Probenahmemechanismus einen Probenahmevorhang (1) aufweist, der Probenahmevorhang (1) in Kontakt und Reibung mit dem zu untersuchenden Objekt kommt und der Probenahmevorhang (1) dazu konfiguriert ist, die Teilchenprobe an dem zu untersuchenden Objekt zu sammeln,
wobei der zweite flexible Probenahmemechanismus ein Probenahmerohr (2) aufweist und das Probenahmerohr (2) dazu konfiguriert ist, die Gasprobe an dem zu untersuchenden Objekt anzusaugen,
wobei das vollautomatische Detektionssystem ferner einen Spurendetektor aufweist, der flexible Probenahmemechanismus dazu konfiguriert ist, die Teilchenprobe und die Gasprobe zur Detektion an den Spurendetektor zu senden, und der Spurendetektor dazu konfiguriert ist, die Teilchenprobe und die Gasprobe zu detektieren und ein Detektionsergebnis auszugeben; und
wobei die zweite Detektionsvorrichtung (102) eine Mehrzahl von Sätzen von flexiblen Probenahmemechanismen und eine Steuervorrichtung aufweist, die Steuervorrichtung elektrisch mit der Mehrzahl von Sätzen von flexiblen Probenahmemechanismen verbunden ist und die Steuervorrichtung dazu konfiguriert ist, die Mehrzahl von Sätzen von flexiblen Probenahmemechanismen zu steuern, um sequenziell in einer zeitgeteilten Weise zu arbeiten, um so die Mehrzahl von Sätzen von flexiblen Probenahmemechanismen und den Spurendetektor sinnvoll zuzuordnen, um sicherzustellen, dass zumindest ein Satz von flexiblen Probenahmemechanismen eine Probe an jedem zu untersuchenden Objekt nimmt und dieses detektiert.

2. Detektionssystem (100) gemäß Anspruch 1, wobei die erste Detektionsvorrichtung (101) folgende Merkmale aufweist:
eine Strahlungsquelle, die dazu konfiguriert ist, einen Strahl zu emittieren, um das zu untersuchende Objekt abzutasten; und
einen Detektor, der stromabwärts der Strahlungsquelle vorgesehen ist und dazu konfiguriert ist, den Strahl zu empfangen, um ein Abtastbild des zu untersuchenden Objekts zu bilden.

3. Detektionssystem (100) gemäß Anspruch 2, wobei die erste Detektionsvorrichtung (101) ein CT-System aufweist.

4. Detektionssystem (100) gemäß Anspruch 1, das ferner eine Induktionsvorrichtung (105) und eine Verarbeitungsvorrichtung (104) aufweist, wobei die Induktionsvorrichtung (105) und die Verarbeitungsvorrichtung (104) elektrisch mit der ersten Detektionsvorrichtung (101) und der zweiten Detektionsvorrichtung (102) verbunden sind und die Verarbeitungsvorrichtung (104) zu Folgendem konfiguriert ist:
Steuern der ersten Detektionsvorrichtung (101) und der zweiten Detektionsvorrichtung (102), um eingeschaltet zu werden, wenn die Induktionsvorrichtung (105) induziert, dass das zu untersuchende Objekt in einen Untersuchungsbereich eintritt.

5. Detektionssystem (100) gemäß Anspruch 4, wobei die Induktionsvorrichtung (105) einen Positionssensor aufweist, der dazu konfiguriert ist, eine Position des zu untersuchenden Objekts zu induzieren.

6. Detektionssystem (100) gemäß Anspruch 1, das ferner eine Anzeigevorrichtung (106) aufweist, wobei die Anzeigevorrichtung (106) elektrisch mit der ersten Detektionsvorrichtung (101) und der zweiten Detektionsvorrichtung (102) verbunden ist und die Anzeigevorrichtung (106) dazu konfiguriert ist, ein Detektionsergebnis der ersten Detektionsvorrichtung (101) und ein Detektionsergebnis der zweiten Detektionsvorrichtung (102) anzuzeigen.

7. Vollautomatisches Detektionsverfahren, das auf das Detektionssystem (100) gemäß einem der Ansprüche 1 bis 6 angewendet wird, das folgende Schritte aufweist:
Befördern des zu untersuchenden Objekts zu einem Untersuchungsbereich unter Verwendung der Beförderungsvorrichtung (103);
Durchführen der physikalischen Abtastung an dem zu untersuchenden Objekt unter Verwendung der ersten Detektionsvorrichtung (101);
Durchführen der chemischen Detektion an dem zu untersuchenden Objekt unter Verwendung der zweiten Detektionsvorrichtung (102); und
gleichzeitiges Erhalten eines Ergebnisses der physikalischen Abtastung und eines Ergebnisses der chemischen Detektion des zu untersuchenden Objekts,
wobei die zweite Detektionsvorrichtung (102) in Verarbeitungsrichtung vor oder nach der ersten Detektionsvorrichtung (101) vorgesehen ist.

8. Detektionsverfahren gemäß Anspruch 7, wobei die physikalische Abtastung ein Durchführen einer Abtastung und Bilderzeugung an dem zu untersuchenden Objekt unter Verwendung einer Strahlungsquelle und eines Detektors aufweist.

9. Detektionsverfahren gemäß Anspruch 7, wobei die chemische Detektion ein Durchführen einer Spurendetektion von Teilchen und Gasen an dem zu untersuchenden Objekt unter Verwendung eines flexiblen Probenahmemechanismus aufweist.

10. Detektionsverfahren gemäß Anspruch 7, das ferner folgende Schritte aufweist:
Detektieren eines Gegenstands unter Verwendung des Detektionssystems (100), um ein historisches Ergebnis der physikalischen Abtastung und ein historisches Ergebnis der chemischen Detektion des Gegenstands zu erhalten;
Trainieren des historischen Ergebnisses der physikalischen Abtastung und des historischen Ergebnisses der chemischen Detektion, um ein Vorhersagemodell zu erhalten; und
Erhalten des Ergebnisses der physikalischen Abtastung und des Ergebnisses der chemischen Detektion des zu untersuchenden Objekts basierend auf dem Vorhersagemodell,
wobei das Verfahren ferner Folgendes aufweist:
das Vorhersagemodell aktualisiert sich selbst basierend auf einem Ergebnis jeder Detektion.

## Revendications

1. Système de détection entièrement automatique (100), comprenant :
un premier dispositif de détection (101) configuré pour effectuer un balayage physique sur un objet à inspecter ;
un deuxième dispositif de détection (102) prévu en amont ou en aval du premier dispositif de détection (101) et configuré pour effectuer une détection chimique sur l'objet à inspecter ; et
un dispositif de transport (103) configuré pour transporter l'objet à inspecter vers le premier dispositif de détection (101) et le deuxième dispositif de détection (102),
dans lequel le deuxième dispositif de détection (102) comprend un mécanisme d'échantillonnage flexible, et le mécanisme d'échantillonnage flexible comprend : un premier mécanisme d'échantillonnage flexible configuré pour collecter un échantillon de particules sur l'objet à inspecter ; et un deuxième mécanisme d'échantillonnage flexible configuré pour collecter un échantillon de gaz sur l'objet à inspecter,
dans lequel le premier mécanisme d'échantillonnage flexible comprend un rideau d'échantillonnage (1), le rideau d'échantillonnage (1) entre en contact et en frottement avec l'objet à inspecter, et le rideau d'échantillonnage (1) est configuré pour collecter l'échantillon de particules sur l'objet à inspecter,
dans lequel le deuxième mécanisme d'échantillonnage flexible comprend un tube d'échantillonnage (2), et le tube d'échantillonnage (2) est configuré pour aspirer l'échantillon de gaz sur l'objet à inspecter,
dans lequel le système de détection entièrement automatique comprend en outre un détecteur de traces, le mécanisme d'échantillonnage flexible est configuré pour envoyer l'échantillon de particules et l'échantillon de gaz au détecteur de traces pour détection, et le détecteur de traces est configuré pour détecter l'échantillon de particules et l'échantillon de gaz et fournir un résultat de détection ; et
dans lequel le deuxième dispositif de détection (102) comprend une pluralité d'ensembles de mécanismes d'échantillonnage flexibles et un dispositif de commande, le dispositif de commande est connecté électriquement à la pluralité d'ensembles de mécanismes d'échantillonnage flexibles, et le dispositif de commande est configuré pour commander la pluralité d'ensembles de mécanismes d'échantillonnage flexibles pour qu'ils fonctionnent séquentiellement selon un mode de partage du temps, de manière à répartir raisonnablement la pluralité d'ensembles de mécanismes d'échantillonnage flexibles et le détecteur de traces pour garantir qu'au moins un ensemble de mécanismes d'échantillonnage flexibles échantillonne et détecte chaque objet à inspecter.

2. Système de détection (100) selon la revendication 1, dans lequel le premier dispositif de détection (101) comprend :
une source de rayonnement configurée pour émettre un rayon pour balayer l'objet à inspecter ; et
un détecteur prévu en aval de la source de rayonnement et configuré pour recevoir le rayon afin de former une image balayée de l'objet à inspecter.

3. Système de détection (100) selon la revendication 2, dans lequel le premier dispositif de détection (101) comprend un système CT.

4. Système de détection (100) selon la revendication 1, comprenant en outre un dispositif d'induction (105) et un dispositif de traitement (104), dans lequel le dispositif d'induction (105) et le dispositif de traitement (104) sont connectés électriquement au premier dispositif de détection (101) et au deuxième dispositif de détection (102), et le dispositif de traitement (104) est configuré pour :
commander le premier dispositif de détection (101) et le deuxième dispositif de détection (102) pour qu'ils soient activés, lorsque le dispositif d'induction (105) déduit que l'objet à inspecter entre dans une zone d'inspection.

5. Système de détection (100) selon la revendication 4, dans lequel le dispositif d'induction (105) comprend un capteur de position configuré pour induire une position de l'objet à inspecter.

6. Système de détection (100) selon la revendication 1, comprenant en outre un dispositif d'affichage (106), dans lequel le dispositif d'affichage (106) est connecté électriquement au premier dispositif de détection (101) et au deuxième dispositif de détection (102), et le dispositif d'affichage (106) est configuré pour afficher un résultat de détection du premier dispositif de détection (101) et un résultat de détection du deuxième dispositif de détection (102).

7. Procédé de détection entièrement automatique appliqué au système de détection (100) selon l'une quelconque des revendications 1 à 6, comprenant :
le transport de l'objet à inspecter vers une zone d'inspection à l'aide du dispositif de transport (103) ;
la réalisation du balayage physique de l'objet à inspecter à l'aide du premier dispositif de détection (101) ;
la réalisation de la détection chimique sur l'objet à inspecter à l'aide du deuxième dispositif de détection (102) ; et
l'obtention simultané d'un résultat de balayage physique et d'un résultat de détection chimique de l'objet à inspecter,
dans lequel le deuxième dispositif de détection (102) est prévu en amont ou en aval du premier dispositif de détection (101).

8. Procédé de détection selon la revendication 7, dans lequel le balayage physique comprend la réalisation d'un balayage et d'une imagerie sur l'objet à inspecter à l'aide d'une source de rayonnement et d'un détecteur.

9. Procédé de détection selon la revendication 7, dans lequel la détection chimique comprend la réalisation d'une détection de traces des particules et de gaz sur l'objet à inspecter à l'aide d'un mécanisme d'échantillonnage flexible.

10. Procédé de détection selon la revendication 7, comprenant en outre :
la détection d'un élément à l'aide du système de détection (100), afin d'obtenir un résultat historique de balayage physique et un résultat historique de détection chimique de l'élément ;
l'apprentissage du résultat historique de balayage physique et du résultat historique de détection chimique afin d'obtenir un modèle prédictif ; et
l'obtention du résultat de balayage physique et le résultat de la détection chimique de l'objet à inspecter sur la base du modèle prédictif,
dans lequel le procédé comprend en outre le fait que :
le modèle prédictif se met automatiquement à jour en fonction du résultat de chaque détection.
